Europäisches Patentamt

European Patent Office

Office européen des brevets

(19)

(11) Veröffentlichungsnummer: **0 099 536**
**B1**

(12) **EUROPÄISCHE PATENTSCHRIFT**

(45) Veröffentlichungstag der Patentschrift:
02.04.86

(51) Int. Cl.⁴: **G 11 B 5/702**

(21) Anmeldenummer: 83106776.4

(22) Anmeldetag: 11.07.83

(54) Magnetischer Aufzeichnungsträger.

(30) Priorität: **22.07.82 DE 3227335**

(43) Veröffentlichungstag der Anmeldung:
**01.02.84 Patentblatt 84/5**

(45) Bekanntmachung des Hinweises auf die Patenterteilung:
**02.04.86 Patentblatt 86/14**

(84) Benannte Vertragsstaaten:
**DE FR GB NL**

(56) Entgegenhaltungen:
**DE - A - 1 906 547**
**DE - A - 2 920 334**
**DE - A - 3 018 834**
**DE - A - 3 018 835**
**DE - A - 3 217 209**
**DE - B - 2 218 141**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft,
Carl-Bosch-Strasse 38, D-6700 Ludwigshafen (DE)**

(72) Erfinder: **Kovacs, Jenoe, Dr., Kantstrasse 9,
D-6717 Hessheim (DE)**
Erfinder: **Kohl, Albert, Wiesenstrasse 3,
D-6714 Weisenheim (DE)**

## Beschreibung

Die Erfindung betrifft ein Verfahren zur Herstellung magnetischer Aufzeichnungsträger aus einem unmagnetischen Trägermaterial und einer darauf aufgebrachten Magnetschicht bestehend aus einem feinteiligen anisotropen magnetischen Material in einer Bindemittelmischung auf der Basis eines Polyurethanionomeren und eines Celluloseesters.

Zur Signalaufzeichnung und -speicherung werden üblicherweise derzeit vorwiegend magnetische Aufzeichnungsträger verwendet, die aus einem unmagnetischen Trägermaterial und einer darauf aufgebrachten Magnetschicht bestehen, welche aus einem magnetischen Material, einem Bindemittelgemisch und Zusatzstoffen aufgebaut ist. Während bei den magnetischen Materialien nur wenige in Frage kommen, ist die Variation bei den organischen polymeren Bindemitteln sehr gross. Im Zuge der sich ausweitenden Anwendungsmöglichkeiten wurden nicht nur die Anforderungen an die elektroakustischen Eigenschaften der Aufzeichnungsträger erhöht, sondern auch hinsichtlich der mechanischen Betriebseigenschaften. Gerade hinsichtlich der Verbesserungen auf dem letztgenannten Gebiet wurden zahlreiche polymere Bindemittel vorgeschlagen.

Es ist bekannt, magnetische Aufzeichnungsträger, die hohen mechanischen Beanspruchungen ausgesetzt sind, mit Dispersionen der Magnetpigmente in Bindemitteln auf Basis von Polyurethanelastomeren oder von Abmischungen von Polyurethanelastomeren mit anderen Polymerbindemitteln als Magnetschicht herzustellen. Polyesterurethanelastomere weisen bei Verwendung als alleinige Bindemittel für die Magnetschicht eine zu geringe Oberflächenhärte auf.

In der Patentliteratur existiert deshalb eine Anzahl von Vorschlägen, die Nachteile der niederen Schichthärte, die bei Verwendung von Polyurethanen als alleinige Bindemittel für die Magnetschicht auftreten, durch Zumischen eines weiteren Bindemittels zu beheben. Die Verbesserung der Schichthärte durch Zumischung eines Polyesters, wie es in der Deutschen Auslegeschrift Nr. 1269661 beschrieben ist, birgt jedoch die Gefahr des Verklebens einzelner Schichtlagen bei höheren Temperaturen und höherem Wickeldruck in sich. Die Abmischung von Polyurethanelastomeren mit höhermolekularen Phenoxyharzen, wie es die Deutsche Auslegeschrift Nr. 1295011 beschreibt, zeigt bis zu Temperaturen von etwa 65° C ausreichend befriedigende mechanische Eigenschaften, die Mitverwendung des Phenoxyharzes bewirkt jedoch eine Verschlechterung der Ausrichtbarkeit der magnetischen Teilchen längs ihrer magnetischen Vorzugsrichtung im Magnetfeld. Es ist auch bekannt, Gemische von Vinylchloridcopolymerisaten mit Polyurethanelastomeren als Bindemittel für Magnetschichten zu verwenden, jedoch ist die relativ geringe thermische Stabilität der resultierenden Produkte nachteilig. Eine Kombination von Polyurethanelastomeren mit Vinylchlorid-Vinylacetat-Copolymerisaten als Bindemittel für Magnetschichten wird in der Deutschen Auslegeschrift Nr. 1282700 empfohlen, jedoch gewährleisten die Verwendung dieser Kombination nicht die von der Praxis für die Magnetschicht geforderten Eigenschaften bei erhöhten Temperaturen.

Auch die Verwendung von Celluloseestern als Bindemittel bei der Herstellung von Magnetschichten ist bekannt. So beschreibt die DE-A Nr. 3018834 ein Verfahren zur Herstellung von Aufzeichnungsträgern, wobei 10 bis 40 % des Bindemittels, neben Polyurethan- und Phenoxyharz, aus Nitrocellulose besteht. Als Schutzmittelbestandteil der Nitrocellulose wird Vinylchlorid-Vinylacetat eingesetzt.

Ähnlich wird gemäss der DE-A Nr. 3018835 vorgegangen. Anstatt eines Phenoxyharzes wird dabei ein Epoxidharz verwendet. Alle Bindemittelanteile werden in organischen Lösungsmitteln gelöst und als solche verwendet. Das Arbeiten mit organisch gelösten Nitrocellulosen ist allerdings nicht ungefährlich, da durch Eintrocknung Nitrocellulose-Pulver entstehen kann, das zur Selbstentzündung neigt. Die vorhandenen Schutzmittel verhindern zwar die Entzündung für einige Zeit, bei Entmischung der Polymeren reicht die Schutzwirkung jedoch nicht mehr aus. Es hat daher nicht an Bemühungen gefehlt, wässerige Nitrocellulose-Dispersionen herzustellen und zu verwenden. In den DE-A Nrn. 2702986 und 2703075 sind Überzugsmittel beschrieben, die bei der Herstellung von Holzlacken Verwendung finden. Neben Alkydharzen werden noch Weichmacher als zusätzliche Komponente eingesetzt, die dann aber die erforderliche Härte und Kratzfestigkeit der Überzüge heruntersetzt. Bei Magnetaufzeichnungsträgern würde jedoch gerade die Kratzfestigkeit oder der Schichtabrieb eine besondere Rolle spielen.

Auch bei der üblichen Herstellung von magnetischen Aufzeichnungsträgern hat der Einsatz von organischen Lösungsmitteln zum Lösen der hochpolymeren physikalisch trocknenden oder chemisch vernetzbaren Bindemittelgemischen bereits zu Problemen geführt.

Es wurde deshalb schon vorgeschlagen, wässerige Polymerdispersionen bei der Herstellung der für die Fertigung von magnetischen Aufzeichnungsträgern geeigneten Dispersionen der magnetischen Materialen einzusetzen. So beschreiben die DE-A Nr. 2513421 und DE-A Nr. 2513422 wässerige Polymerdispersionen auf der Basis vernetzungsfähiger Vinylacetat- oder Acrylat-Polymerer und Melamin/Formaldehyd. Die bei der Herstellung dieser Dispersionen benötigten Hilfsstoffe, wie Schutzkolloide, Verdickungsmittel oder Emulgatoren, führen jedoch bei der Herstellung der Dispersionen der magnetischen Materialien zu Schaumbildung und zu magnetischen Schichten mit erhöhter Schmierneigung.

In der DD-A Nr. 116693 werden magnetische Aufzeichnungsträger offenbart, bei denen die Magnetschichten mit wässerigen Dispersionen von Polymerpartikeln mit gegenüber den magnetischen Materialien unterschiedlichem Vorzeichen der elektrischen Ladung hergestellt werden, wie z.B. weich eingestellte Polyacrylate, Copolymerisate von Vinylacetaten mit ungesättigten organischen Säuren, Copolymerisate von Vinyl- und Vinylidenchloriden, Copolymerisate von Styrol und Butadien, Copolymerisate von Acrylester und Styrol sowie Polyurethane, deren Teilchengrösse nicht grösser, zweckmässig kleiner, als die der magnetischen Pigmente sein soll. Mit derartigen Bindemitteln aufgebaute magnetische Aufzeichnungsträger sind jedoch empfindlich gegen Feuchtigkeit, neigen zum Kleben und Schmieren und ausserdem ist die Magnetschicht nicht abriebfest genug.

Der Einsatz von vernetzten kationischen Polyurethanen zur Beschichtung von Leder und Textil und auch für die Herstellung von Magnetschichten wird in der DD-A Nr. 116248 vorgeschlagen. Diese Polyurethane werden durch Reaktion von Polyharnstoffurethanelektrolyt-Dispersionen, welche durch Umsetzung von aromatischen und/oder alipathischen Diisocyanaten mit längerkettigen Diolen zù NCO-terminalen Präpolymeren, anschliessender Kettenverlängerung mit tertiären Stickstoff enthaltenden Diolen, weiterer Umsetzung mit Harnstoff sowie Protonierungs- bzw. Quaternierungsmitteln und anschliessender Dispergierung in Wasser gewonnen werden, mit Methyloletherverbindungen hergestellt. Von Nachteil ist dabei, dass eine Vernetzung der Harnstoffgruppen mit N-Methylolethern notwendig ist. Insbesondere ergeben sich jedoch aus der pH-Empfindlichkeit der Bindemittel-Dispersion Schwierigkeiten. So wäre es erforderlich, beim Dispergieren der meist eine saure oder aber basische Oberfläche aufweisenden magnetischen Materialien diese zuerst dem pH-Wert des Bindemittels anzugleichen. Da bereits geringe Unterschiede im pH-Wert das Polyurethan anvernetzen oder zum Teil koagulieren liessen, würden sich sowohl Schwierigkeiten bei der Verarbeitung der Magnetdispersion ergeben, als auch die Qualität der magnetischen Aufzeichnungsträger auf Grund der dadurch verursachten höheren Fehlerzahl beeinträchtigt werden.

Auch in der DE-A Nr. 2920334 wird ein Verfahren zur Herstellung magnetischer Aufzeichnungsträger mit Hilfe wässeriger Polyurethandispersionen beschrieben. Hierbei werden die feinteiligen Dispersionen dadurch erhalten, dass durch Umsetzung mit Bernsteinsäureanhydrid ionische Zentren entstehen und anschliessend mit einem Amin, vorzugsweise Triethylamin, neutralisiert wird. Beim Trocknungsvorgang verflüchtigt sich das Amin zumindest teilweise, wodurch die Wasserfestigkeit der Beschichtung erreicht wird. Dieses Verfahren hat den Nachteil, dass das abgespaltene Amin aus der Abluft herausgewaschen und das Abwasser gereinigt werden muss. Die Spaltreaktion ist ebenfalls nicht vollständig, oder die Spaltprodukte können nicht vollständig aus den Reaktionsmedien entfernt werden. Die Folgen sind hohe Abriebwerte sowie ungenügende Reibungswerte solcher Aufzeichnungsträger.

Aufgabe der Erfindung war es daher, auf Grund der bekannten Vorteile wässeriger Polymerdispersionen, ein Verfahren zur Herstellung magnetischer Aufzeichnungsträger bereitzustellen, bei dem bei der Herstellung verminderte Abspaltprodukte entstehen und womit sich insbesondere Abriebverhalten sowie die dynamichen Reibungswerte der resultierenden Aufzeichnungsträger deutlich verbessern lassen.

Es wurde nun gefunden, dass sich magnetische Aufzeichnungsträger durch Dispergieren von feinteiligem anisotropen magnetischen Material und üblichen Zusatzstoffen in einer Lösung einer Bindemittelmischung auf der Basis eines wässerigen Polyurethanionomeren, schichtförmiges Auftragen der Disperson auf ein nichtmagnetisierbares Trägermaterial, anschliessendes Ausrichten des anisotropen magnetischen Materials und Trocknen der aufgebrachten Schicht aufgabengemäss herstellen lassen, wenn die Dispersion aus

A. 35 bis 45 Gew.% magnetischem Material
B. 5 bis 15 Gew.% Polyurethanionomeren
C. 1,5 bis 7,5 Gew.% Celluloseester
D. 0,5 bis 2,5 Gew.% Alkyd- und/oder Melaminharz
E. 1 bis 2 Gew.% Dispergierhilfsmittel und
F. 40 bis 50 Gew.% Wasser als
Lösungsmittel zusammengesetzt wird.

Die in der Magnetschicht der erfindungsgemäss hergestellten magnetischen Aufzeichnungsträger enthaltenden Celluloseester sind insbesondere Celluloseacetat, Celluloseacetobutyrat, Celluloseacetatbenzoat und Cellulosesorbatacetat und Mischungen dieser Ester. Ganz besonders geeignet ist Nitrocellulose, beispielsweise die üblichen Collodiumwollequalitäten, d.h. Cellulosesalpetersäureester mit einem Stickstoffgehalt von 10,2 bis 12,4 Gew.%. Die Celluloseester werden in bekannter Weise hergestellt, indem der Celluloseester in einem polaren Lösungsmittel gelöst wird. Die Lösung wird anschliessend mit einer Schutzkolloid- und Emulgator-haltigen wässerigen Lösung unter hohen Scherkräften versetzt. Danach wird das organische Lösungsmittel als wässeriges Azeotrop abdestilliert und die zurückbleibende wässerige Emulsion gegebenenfalls mit weiterem Wasser verdünnt. Die leichte Entflammbarkeit von Nitrocellulose bedingt stets eine vorsichtige Handhabung, um gegenüber Feuer- und Explosionsgefahr geschützt zu sein. Durch Verwendung von wässeriger Nitrocellulose-Dispersionen besteht diese Gefahr nicht mehr.

Die weitere, den Hauptanteil der Bindemittelmischung bildende Komponente ist das Polyurethanionomer. Die hierfür geeigneten Substanzen sind in der DE-A Nr. 2920334 und der DE-A Nr. 3005009 ausführlich beschrieben.

Als Alkydharze kommen vorzugsweise öl- oder fettsäuremodifizierte Alkydharze in Betracht. Unter Alkydharzen versteht man durch Polykondensation nach bekannten Verfahren aus Alkoholen und Carbonsäuren hergestellte Polyester der Art, wie sie z.B. in Ullmanns Enzyklopädie der Technischen Chemie definiert oder in D.H. Solomon, The Chemistry of Organic Filmformers, S. 75 bis 101 beschrieben sind. Dies sind beispielsweise Polykondensationsprodukte aus Phthalsäureanhydrid und mehrwertigen Alkoholen sowie aus Isophthalsäure und/oder Terephthalsäure mit Glyzerin und/oder Pentaerythrit und/oder Hexantriol und/oder Trimethylolpropan oder deren Modifikationen mit unterschiedlichen Fettsäuren.

Ferner können den Magnetschichten in an sich üblicher Weise in kleinen Mengen Dispergiermittel, Füllstoffe und Gleitmittel zugesetzt werden, die bei der Dispergierung der Magnetpigmente oder bei der Herstellung der Magnetschicht zugemischt werden. Beispiele geeigneter Zusätze sind Metallseifen, wie Salze aus Fettsäuren oder isomerisierten Fettsäuren und Metallen der ersten bis vierten Hauptgruppe des Periodensystems der Elemente, Stearinsäure, Fettsäureester oder Wachse, Silikonöle, Russ usw. Die Menge der Zusätze ist die an sich übliche, sie liegt im allgemeinen unter 3 Gewichtsprozent, bezogen auf die Magnetschicht.

Als magnetische Materialien werden die an sich bekannten verwendet, wie Gamma-Eisen(III)-oxid, feinteiliger Magnetit, ferromagnetisches Chromdioxid sowie feinteilige ferromagnetische Metalle oder Metallegierungen. Bevorzugt sind nadelförmiges Gamma-Eisen(III)-oxid und ferromagnetisches Chromdioxid.

Das Verhältnis von magnetischem Material zu Bindemittel liegt zwischen 2 bis 10 Gewichtsteilen und insbesondere 3 bis 6 Gewichtsteilen magnetisches Material zu 1 Gewichtsteil des Bindemittelgemisches. Die Hauptbestandteile der Bindemittel setzen sich vorzugsweise aus 60 bis 90 Gewichtsteilen Polyurethanionomeren und 10 bis 40 Teilen Celluloseester zusammen.

Als unmagnetische Träger lassen sich die üblichen starren oder flexiblen Trägermaterialien verwenden, insbesondere Folien aus linearen Polyester, wie Polyethylenterephthalat, im allgemeinen in Stärken von 4 bis 200 µm und insbesondere von 10 bis 35 µm. In neuerer Zeit ist auch die Anwendung von Magnetschichten auf Papierträgern für Zwecke der mittleren Datentechnik bedeutend geworden; auch hierfür lassen sich die Beschichtungsmassen vorteilhaft verwenden.

Die Herstellung der Magnetschicht erfolgt in an sich bekannter Weise. Zweckmässig wird die in einer Dispergiermaschine, z.B. einer Kugelmühle, aus dem magnetischen Material und einer Lösung oder Dispersion der Bindemittel unter Zusatz von Dispergierhilfsmittel hergestellte Dispersion nach eventuellem Zusatz von Gleitmittel filtriert und mit einer üblichen Beschichtungsmaschine auf den nichtmagnetisierbaren Träger aufgetragen und nach einer üblichen magnetischen Ausrichtung der Teilchen zweckmässigerweise zwei bis fünf Minuten bei Temperaturen von 50 bis 90° C getrocknet. Eine Härtung des Bindemittels bei höheren Temperaturen oder in Gegenwart eines Härtungskatalysators ist im allgemeinen nicht erforderlich. Die Magnetschicht kann auf üblichen Maschinen durch Hindurchführen zwischen beheizten und polierten Walzen, gegebenenfalls bei Anwendung von Druck und Temperatur von 50 bis 100° C, vorzugsweise 60 bis 89° C geglättet und verdichtet werden. Die Dicke der Magnetschicht beträgt im allgemeinen 3 bis 15 µm. Im Falle der Herstellung von flexiblen Magnetbändern werden die beschichteten Folien in üblichen Breiten geschnitten.

Beim Einsatz wässeriger Polymerdispersionen als Bindemittel zur Herstellung von Magnetschichten für magnetische Aufzeichnungsträger erwiesen sich die anteilig zugesetzten Celluloseester wegen ihrer guten Affinität gegenüber dem magnetischen Material als sehr vorteilhaft zur Verbesserung der geforderten physikalischen Eigenschaften eines Aufzeichnungsträgers. Der Einsatz von Alkydharzen und/oder Melaminharzen hat sich insbesondere zusammen mit Nitrocellulose als vorteilhaft erwiesen und stellt hier eine zusätzliche Sicherheit zur Handhabung von Nitrocellulose dar.

Die erfindungsgemäss hergestellten magnetischen Aufzeichnungsträger zeichnen sich durch hervorragende mechanische Eigenschaften aus. Besonders die Klimafestigkeit, Planheit und gute Ausrichtbarkeit der Magnetschichten sind überdurchschnittlich.

Die Erfindung sei anhand nachfolgender Beispiele gegenüber dem Stand der Technik (Vergleichsversuch) näher erläutert.

*Vergleichsversuch*

Es wurden in einer Stahlkugelmühle mit einem Inhalt von 30000 Volumenteilen, welche mit 40000 Gew.-Teilen Kugeln gefüllt war und mit 50 Upm betrieben wurde, 6000 Teile eines nadelförmigen Gamma-Eisen(III)oxids mit einer Koerzitivfeldstärke von 24,3 kA/m in einer Lösung aus 240 Teilen 30%igem Ammonium-Polyacrylat, 100 Teilen 10%igem Ammoniak und 3900 Teilen Wasser 10 Stunden lang dispergiert. Zu diesem Ansatz wurden dann 3750 Teile Polyurethandispersion gemäss Beispiel 1 der DE-OS Nr. 2920334 sowie noch 60 Teile eines handelsüblichen Siliconöls zugesetzt und nochmals 30 Minuten dispergiert.

Mit der so erhaltenen Magnetmaterial-Dispersion wurde nach dem Filtrieren durch einen Papierfilter mit einer Porenweite von 5 µm mittels eines üblichen Linealgiessers eine Polyethylenterephthalatfolie von 12 µm Dicke beschichtet. Vor der Trocknung bei 80 bis 120° C wurde die beschichtete Folie zur Ausrichtung der Gamma-Eisen(III)oxid-Teilchen durch ein homogenes Magnetfeld geführt. Danach erfolgte noch eine Glättung der Schicht durch Kalandrieren bei 80° C und 23 N/mm² Liniendruck. Die Dicke der Magnetschicht betrug 5,0 ± 0,3 µm. Die beschichtete Folie wurde anschliessend in 3,81 mm breite Magnetbänder geschnitten und folgenden Prüfungen unterzogen:

1) Reibungskoeffizient Schicht/Stahl nach DIN 45522, Blatt 1.

2) Abrieb: Gemessen wird der Abrieb als Gewichtsverlust (in mg) einer Bandschleife von 3 m Länge in einem Prüfklima von 40° C und 55% rel.

Feuchte nach 450 Durchläufen bei einer Bandgeschwindigkeit von 19 cm/sec.

*Beispiel 1*

Es wurde wie im Vergleichsversuch beschrieben verfahren, jedoch wurden nur 3375 Teile der genannten 40%igen wässerigen Polyurethandispersion eingesetzt. Dazu kamen dann noch 375 Teile einer 40%igen wässerigen Dispersion aus 70 Gew.% einer Nitrocellulose-Dispersion und 30 Gew.% eines Alkydharzes aus Phthalsäureanhydrid Äthylenglykol, Pentaerythrit und Erdnussfettsäureöl.

Die Prüfergebnisse sind in der Tabelle angegeben.

*Beispiel 2*

Es wurde wie in Beispiel 1 beschrieben verfahren, jedoch bestand die Bindemittelmischung aus 3000 Teilen der genannten Polyurethandispersion und 750 Teilen der Nitrocellulose/Alkydharzdispersion. Die Prüfergebnisse sind in der Tabelle angegeben.

*Beispiel 3*

Es wurde wie in Beispiel 1 beschrieben verfahren, jedoch bestand die Bindemittelmischung aus 2655 Teilen der genannten Polyurethandispersion und 1125 Teilen der Nitrocellulose/Alkydharzdispersion. Die Prüfergebnisse sind in der Tabelle angegeben.

*Tabelle*

|  | Reibungskoeffizient | Abrieb |
|---|---|---|
| Vergleichsversuch | 0,38 | 7,3 |
| Beispiel 1 | 0,32 | 1,4 |
| Beispiel 2 | 0,30 | 0,4 |
| Beispiel 3 | 0,30 | 0,3 |

**Patentanspruch**

Verfahren zur Herstellung von magnetischen Aufzeichnungsträgern durch Dispergieren von feinteiligem anisotropen magnetischen Material und üblichen Zusatzstoffen in einer Lösung einer Bindemittelmischung auf der Basis eines wässerigen Polyurethanionomeren, schichtförmiges Auftragen der Dispersion auf ein nichtmagnetisierbares Trägermaterial, anschliessendes Ausrichten des anisotropen magnetischen Materials und Trocknen der aufgebrachten Schicht, dadurch gekennzeichnet, dass die Dispersion aus

A. 35 bis 45 Gew.% magnetischem Material
B. 5 bis 15 Gew.% Polyurethanionomeren
C. 1,5 bis 7,5 Gew.% Celluloseester
D. 0,5 bis 2,5 Gew.% Alkyd- und/oder Melaminharz
E. 1 bis 2 Gew.% Dispergierhilfsmittel und
F. 40 bis 50 Gew.% Wasser als Lösungsmittel zusammengesetzt wird.

**Revendication**

Procédé de fabrication de supports d'enregistrement magnétiques par dispersion de matière magnétique anisotrope, finement dispersée, et d'additifs usuels, dans une solution de mélange de liant à base d'un ionomère de polyuréthanne aqueux, application en couche de la dispersion sur matériau-support non magnétisable, puis alignement de la matière magnétique anisotrope et séchage de la couche appliquée, caractérisé par le fait que la dispersion est composée de

A. 35 à 45 % en poids de matière magnétique
B. 5 à 15 % en poids de ionomère de polyuréthanne
C. 1,5 à 7,5% en poids d'ester cellulosique
D. 0,5 à 2,5% en poids de résine alkyle et/ou mélamine
E. 1 à 2 % en poids d'auxiliaire de dispersion et
F. 40 à 50 % en poids d'eau comme solvant.

**Claim**

A process for the production of a magnetic recording medium by dispersing a finely divided anisotropic magnetic material and conventional additives in a solution of a binder mixture based on an aqueous polyurethane ionomer, applying a layer of the dispersion to a non-magnetizable base material and subsequently orienting the anisotropic magnetic material and drying the applied layer, wherein the dispersion consists of

A. from 35 to 45 % by weight of magnetic material,
B. from 5 to 15 % by weight of a polyurethane ionomer,
C. from 1.5 to 7.5% by weight of a cellulose ester,
D. from 0.5 to 2.5% by weight of an alkyd resin and/or a melamine resin,
E. from 1 to 2 % by weight of a dispersant, and
F. from 40 to 50 % by weight of water als solvent.